# EUROPÄISCHE PATENTSCHRIFT

(11) **EP 0 590 333 B1**
(45) Veröffentlichungstag und Bekanntmachung des Hinweises auf die Patenterteilung: **21.11.2001**
(21) Anmeldenummer: 93113987.7
(22) Anmeldetag: 01.09.1993
(51) Int. Cl.: H04L 12/56, H04Q 11/04

(54) **Verfahren zur Zuteilung von vermittungstechnischen Ressourcen in einem im Asynchron-Transfer-Modus wirkenden Kommunikationssystem**
Method for resource allocation in ATM communication system
Procédé pour l'allocation des ressources dans un réseau de communication ATM

(30) Priorität: 29.09.1992 DE 4232652
(43) Veröffentlichungstag der Anmeldung: 06.04.1994
(73) Patentinhaber: SIEMENS AKTIENGESELLSCHAFT, 80333 München (DE)
(72) Erfinder: Hünlich, Klaus, Dipl.-Phys., D-85467 Neuching (DE)

(56) Entgegenhaltungen:
- EP-A- 0 406 759
- EP-A- 0 473 188
- IEEE COMMUNICATIONS MAGAZINE, Bd. 29, Nr. 10, 1.Oktober 1991, Seiten 54-64, XP000271099 ISRAEL CIDON ET AL: "BANDWIDTH MANAGEMENT AND CONGESTION CONTROL IN PLANET"
- IEEE COMMUNICATIONS MAGAZINE, Bd. 30, Nr. 7, 1.Juli 1992, Seiten 42-47, XP000307912 SETIADI YAZID ET AL: "CONGESTION CONTROL METHODS FOR BISDN"

## Beschreibung

In im Asynchron-Transfer-Modus wirkenden Kommunikationssystemen, insbesondere in Vermittlungseinrichtungen oder vermittlungstechnischen Vorfeldeinrichtungen, werden zu übermittelnde digitale Informationen durch Pakete fester Länge übermittelt, die in der Fachwelt als Zellen bekannt sind. Die Zellen umfassen 48 Oktetts für die zu übermittelnde digitale Nutzinformation und 5 Oktetts für einen Zellkopf, in dem die vermittlungstechnischen Informationen für einen virtuellen Weg in einem Kommunikationsnetz eingefügt sind. Die Zellen werden überwiegend in an das Kommunikationssystem angeschlossenen Kommunikationsendeinrichtungen gebildet und an das Kommunikationssystem übermittelt. Alternativ sind von den Kommunikationsendeinrichtungen übermittelte, digitale Informationen im Kommunikationssystem in Zellen paketierbar.

Die bisher bekannten Verfahren zur Zuteilung von vermittlungstechnischen Ressourcen eines Kommunikationssystems basieren auf einem statistischen Verkehrsverhalten der Kommunikationsendeinrichtungen, wobei den im Kommunikationssystem ankommenden Zellen bzw. digitalen Informationen im Sinne einer kommunikationssysteminternen Vermittlung die vermittlungstechnischen Ressourcen in der Reihenfolge ihrer Ankunft zugeteilt werden. Die vermittlungstechnischen Ressourcen stellen diejenigen Betriebsmittel dar, die bei beispielsweise Wählverbindungen für das temporäre Vermitteln der Zellen vorgesehen sind. Die vermittlungstechnischen Ressourcen umfassen insbesondere die Zentral- und Teilkoppel- sowie Multiplexeinrichtungen von Kommunikationssystemen.

Eine Kommunikationsbeziehung bzw. Verbindung zwischen den Kommunikationsendeinrichtungen über virtuelle Wege bzw. Pfade wird in einem im Asynchron-Transfer-Modus wirkenden Kommunikationsnetz mit Hilfe bekannter, standardisierter Signalisierungsverfahren eingerichtet. Hierbei ist für jede der im virtuellen Pfad liegenden Kommunikationssysteme eine Leitwegtabelle vorgesehen, in die während der Signalisierungsprozedur durch die Kommunikationssysteme ermittelte, den Kommunikationssystemeingang und -ausgang des Pfades definierende Pfadinformationen eingefügt sind. Die für die jeweilige Verbindung erforderlichen vermittlungstechnischen Ressourcen werden durch kommunikationsendeinrichtungssignalisierte, vermittlungstechnische Angaben wie mittlere Übertragungsgeschwindigkeit bzw. Spitzenübertragungsgeschwindigkeit in den Kommunikationssystemen zugeteilt.

Bei einer temporären Überlastsituation eines Kommunikationssystems, d. h. der Umfang der vermittlungstechnischen Ressourcen eines Kommunikationssystems reicht nicht aus, um die ankommenden Zellen zu vermitteln, werden die nicht sofort vermittelbaren Zellen bekannterweise in Speichereinrichtungen zwischengespeichert und damit eine zellenverlustfrei bzw. störungsfreie Vermittlung der Zellen - zwar mit einer etwas erhöhten Verzögerung - erreicht. Bei längerfristigen Überlastsituationen werden beispielsweise nach einem statistischen Verfahren einzelne Zellen oder Zellengruppen vermittelt oder verworfen, d. h. nicht mehr übertragen. Eine derartige statistische Zuteilung von vermittlungstechnischen Ressourcen ist beispielsweise aus der Druckschrift "IEEE International Conference on Communications, Conference Record Vol. 1, World Prosperty through Communications (1989), 'A statistical band with allocation and usage monitoring algorithm for ATM-networks', 13.5.1 bis 13.5.8" bekannt. Darüberhinaus ist bekannt, die Verwerfung der Zellen in Abhängigkeit von einer Kennzeichnung - beispielsweise einer Prioritätskennzeichnung - durchzuführen. Hierbei werden die Zellen mit niedrigeren Prioritäten wesentlich häufiger verworfen als Zellen mit höheren Prioritäten.

So ist beispielsweise aus der europäischen Offenlegungsschrift EP 0 473 188 A1 ein Verfahren für eine Zuteilung von vermittlungstechnischen Ressourcen in einem im Asynchron-Transfer-Modus wirkenden Kommunikationssystem bekannt, bei dem für eine Datenübermittlung im Rahmen eines virtuellen Kanals eine Mehrzahl von sogenannten Zellverlust-Prioritätsebenen ('cell loss priority levels') definiert werden. Gemäß dem beschriebenen Verfahren wird beispielsweise nur eine Zellverlustrate für 'loss intolerable cells' oder es werden alternativ verschiedene Zellverlustraten für 'loss intolerable cells' und 'loss tolerable cells' definiert.

Bei all diesen bekannten Verfahren werden zumindest einzelne Zellen verworfen, wodurch bei der Übermittlung von Daten, z.B. File-Transfer, durch die übergeordneten Protokollschichten in den Kommunikationsendeinrichtungen häufig gestörte Übermittlungen erkannt und erneute Übertragungsversuche eingeleitet werden. Letztlich führen diese durch die Zellenverwerfung hervorgerufenen Datenübermittlungsstörungen zu immer mehr Übertragungswiederholungen und einer damit verbundenen weiteren Erhöhung der Verkehrsbelastung des Kommunikationssystem und einer damit verbundenen, ständig fallenden Nutzungsrate der Übermittlungskapazitäten. Dies bedeutet, daß in Überlastsituation von im Asynchron-Transfer-Modus wirkenden Kommunikationssystemen eine Übermittlung von digitalen Informationen, insbesondere von Daten, bei denen kein Datenverlust auftreten darf, aufgrund ständiger Übergangswiederholungen und damit verbundener steigender Verkehrsbelastung nicht mehr möglich ist.

Die der Erfindung zugrundeliegende Aufgabe besteht darin, digitale Informationen, insbesondere Daten, weitgehend ohne Informations- bzw. Datenverlust über im Asynchron-Transfer-Modus wirkende Kommunikationssysteme unter Berücksichtigung unterschiedlicher Verkehrsbelastungssituationen zu übermitteln. Die Aufgabe wird durch die Merkmale des Anspruchs 1 gelöst.

Der wesentliche Aspekt des erfindungsgemäßen Verfahrens ist darin zu sehen, daß mit Hilfe einer während der Signalisierungsprozedur von den Kommunikationsendeinrichtungen übermittelten Anmeldeinformation sowie einer Ressourcenumfanginformation ein Ressourcenzuteilverfahren für zellenverlustfrei zu übermittelnde Zellen eingeleitet wird. Hierbei wird der für die zellenverlustfreie Übermittlung erforderliche Ressourcenumfang durch Einfügen der Ressourcenumfanginformation in die Leitwegtabelle des jeweiligen Kommunikationssystems angemeldet, jedoch noch nicht zugeteilt. Nach Empfang der ersten zellenverlustfrei zu übermittelnden Zelle werden die vermittlungstechnischen Ressourcen für die Dauer der Verbindung ausschließlich für die Übermittlung der zellenverlustfrei zu übermittelnden Zellen zugeteilt, d. h. sie sind für andere Verbindungen nicht verfügbar, sofern eine vom Kommunikationssystem gebildete und von der Verkehrsbelastung des Kommunikationssystems abhängige Ressourcenverfügbarkeitsinformation nicht in die Leitwegtabelle eingefügt ist. Bei eingefügter Ressourcenverfügbarkeitsinformation, das heißt bei nicht ausreichender Verfügbarkeit der vermittlungstechnischen Ressourcen in einem Kommunikationssystem, z. B. in einer Verkehrsüberlastsituation, werden alle ankommenden, zellenverlustfrei zu übermittelnden Zellen verworfen, d. h. nicht vermittelt. Durch diese Maßnahme wird erreicht, daß bei Datenübertragungen mehrmalige Datenübertragungs-Wiederholungen vermieden werden, wobei durch die höheren Protokollschichten in den jeweiligen Kommunikationsendeinrichtungen die jeweilige Verbindung erheblich frühzeitiger unterbrochen, d. h. das Übermitteln von Zellen eingestellt wird. Nach einer Zuteilung der vermittlungstechnischen Ressourcen durch Empfang der ersten zellenverlustfrei zu übermittelnden Zelle wird eine Ressourcenbelegungsinformation in die bekannte Leitwegtabelle des jeweiligen Kommunikationssystems eingefügt, wobei die vermittlungstechnischen Ressourcen bis zur Zuteilung für andere zu übermittelnde Zellen zuteilbar sind- Anspruch 3. Die ausschließlich für eine zellenverlustlose Übermittlung von Zellen zugeteilten vermittlungstechnischen Ressourcen werden nach Empfang der letzten Zelle durch Entfernen der Ressourcenbelegungsinformation aus der Leitwegtabelle für eine weitere Vermittlung von Zellen freigegeben - Anspruch 2. Die wesentlichen Vorteile des erfindungsgemäßen Verfahrens sind darin zu sehen, daß jeglicher Zellenverlust für zellenverlustfrei zu übermittelnde digitale Informationen vermieden wird und bei einer Überlastsituation des Kommunikationssystems durch das vollständige Verwerfen von zellenverlustfrei zu übermittelnder Zellen, für die keine vermittlungstechnischen Ressourcen verfügbar sind, keine weitere zusätzliche Verkehrsbelastung auftritt und somit zu keiner weiteren Erhöhung der Überlastsituation führt.

Nach einer weiteren Ausgestaltung des erfindungsgemäßen Verfahrens ist die Ressourcenumfanginformation besonders vorteilhaft durch eine die Übermittlungsgeschwindigkeit anzeigende Bitrateninformation - z. B. in KBit/s - repräsentiert - Anspruch 4.

Nach einer weiteren vorteilhaften Weiterbildung des erfindungsgemäßen Verfahrens sind die Ressourcenverwaltungsbereiche durch einen jeweils ein Bit repräsentierenden Bereich realisiert und die Anmeldeinformation, Ressourcenverfügungsinformation und die Ressourcenbelegungsinformation ist durch eine binäre, eine ein Bit umfassende Information dargestellt - Anspruch 5. Durch diese Maßnahme werden die für das erfindungsgemäße Verfahren zusätzlich vorgesehenen Informationen mit minimalstem zusätzlichen Aufwand in die vorhandenen vermittlungstechnischen Informationen einbezogen.

Besonders vorteilhaft wird das erfindungsgemäße Verfahren durch eine in jedem Kommunikationssystem implementierte Zuteilroutine ZR realisiert - Anspruch 6, wobei das Verfahren einem statistischen Zuteilverfahren überlagerbar ist. Bei statistischen Zuteilverfahren sind eventuell überlagerte Prioritätssteuerungen oder Zwischenspeicherverfahren einbezogen.

Im folgenden wird das erfindungsgemäße Verfahren anhand dreier Blockschaltbilder und eines Ablaufdiagramms näher erläutert.

Dabei zeigen:
- FIG 1: ein Blockschaltbild eines im Asynchron-Transfer-Modus wirkenden Kommunikationssystems,
- FIG 2A,B: den Aufbau einer für die Verbindungssignalisierung vorgesehenen und einer zu vermittelnden Zelle,
- FIG 3: einen Ausschnitt einer gemäß FIG 1 angeordneten Leitwegtabelle, und
- FIG 4: ein Programmablaufdiagramm einer in einem Kommunikationssystem implementierten Zuteilroutine.

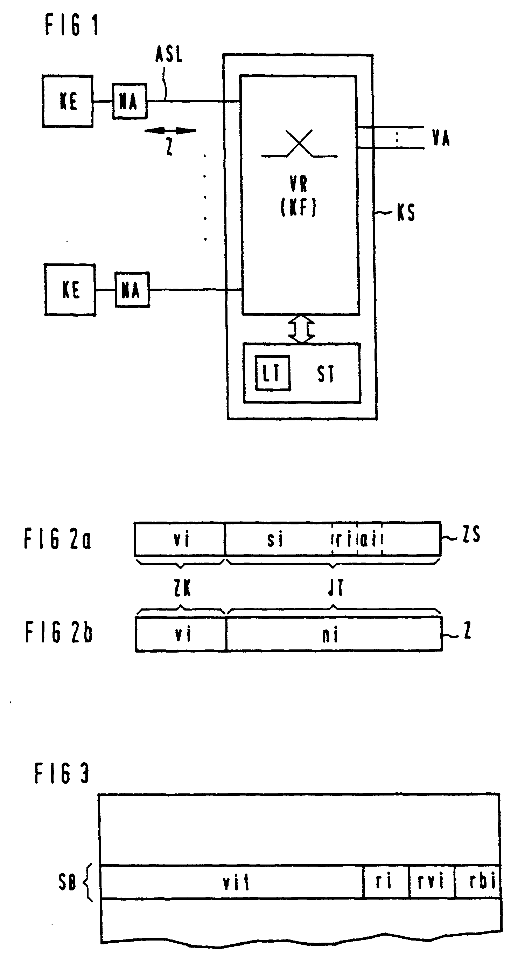

FIG 1 zeigt ein Kommunikationssystem KS, an das über Anschlußleitungen ASL und Netzabschlußeinrichtungen NA Kommunikationsendeinrichtungen KE und zu weiteren Kommunikationssystemen KS führende Verbindungsleitungen VL angeschlossen sind. Das Kommunikationssystem KS weist ein im Asynchron-Transfer-Modus wirkendes Koppelfeld KF auf. Im Ausführungsbeispiel stellt dieses Koppelfeld KF die Gesamtheit der vermittlungstechnischen Ressourcen VR des Kommunikationssystems KS dar. Weitere vermittlungstechnische Ressourcen VR stellen beispielsweise Teilkoppelfeldeinrichtungen von Netzvorfeldeinrichtungen, z. B. im Asynchron-Transfer-Modus wirkenden Multiplexeinrichtungen, dar. Die vermittlungstechnischen Einstellungen des Koppelfeldes KF bzw. der vermittlungstechnischen Ressourcen VR werden mit Hilfe einer den vermittlungstechnischen Ressourcen VR zugeordneten programmgesteuerten Steuerung ST bewirkt.

In den Kommunikationsendeinrichtungen KE werden die zu übermittelnden digitalen Informationen ni in Zellen Z eingefügt und an das Kommunikationssystem KS übermittelt. Alternativ sind von den Kommunikationsendeinrichtungen KE übermittelte digitale Informationen ni in der Netzabschlußeinrichtung NA in Zellen paketierbar. Des weiteren wird in den Netzabschlußeinrichtungen NA die physikalische Anpassung an die übertragungstechnischen Bedingungen der Anschlußleitung ASL durchgeführt. Für den Aufbau einer Verbindung zwischen zumindest zwei Kommunikationsendeinrichtungen sind signalisierungsindividuelle Zellen vorgesehen, wobei der Zellkopf die virtuellen Kanal- und Pfadinformationen enthält und in den Informationsteil die Signalisierungsinformationen eingefügt sind.

In FIG 2A,B ist jeweils der Aufbau einer für die Verbindungssignalisierung vorgesehenen und einer zu vermittelnden Zelle Z, ZS dargestellt. Eine gemäß den CCITT-Empfehlungen standardisierte Zelle Z, ZS ist durch einen 48 Oktetts umfassenden Informationsteil IT und durch einen 5 Oktetts umfassenden Zellenkopf ZK gebildet. In den Informationsteil IT sind die zu übermittelnden digitalen Informationen bzw. Nutzinformationen ni oder Signalisierungsinformationen si eingefügt. Für das Ausführungsbeispiel sei angenommen, daß der Zellenkopf ZK im wesentlichen gemäß den CCITT-Empfehlungen für die Kommunikationsendeinrichtung-Kommunikationssystem-Schnittstelle strukturiert ist. Hierbei sind die im Zellenkopf ZK enthaltenen Vermittlungsinformationen vi durch eine virtuelle Wegeinformation und durch eine virtuelle Kanalinformation repräsentiert. Bei einer für die Signalisierung vorgesehenen Zelle ZS wird mit Hilfe dieser Vermittlungsinformationen vi und in den Informationsteil IT eingefügten Signalisierungsinformationen si ein virtueller Pfad, d. h. eine virtuelle Verbindung von einer Kommunikationsendeinrichtung KE über ein oder mehrere Kommunikationssysteme zu einem durch die Signalisierungsinformationen bestimmten weiteren Kommunikationsendgerät KE eingerichtet. Die Einstellinformationen für den jeweiligen Pfad bzw. die jeweilige Verbindung werden in jedem Kommunikationssystem KS ermittelt und in einer Leitwegtabelle LT für die Dauer einer Verbindung gespeichert.

Den Aufbau einer derartigen Leitwegtabelle LT zeigt FIG 3. Hierbei ist für jede Verbindung bzw. für jeden Pfad ein definierter Speicherbereich SB vorgesehen. In den Speicherbereich SB ist im wesentlichen eine mit Hilfe der Steuerung ST ermittelte vermittlungstechnische Information vit eingetragen. Mit Hilfe dieser vermittlungstechnischen Information vit werden die zu der jeweiligen Verbindung zugehörigen Zellen Z von einem Eingangspunkt zu einem Ausgangspunkt des Koppelfeldes KF bzw. der vermittlungstechnischen Ressourcen VR vermittelt. Der Eingangspunkt bzw. der Ausgangspunkt kann sowohl ein mit der Anschlußleitung ASL oder einer Verbindungsleitung VL verbundener Eingang bzw. Ausgang des Koppelfeldes KF darstellen.

Beim erfindungsgemäßen Verfahren werden die für die Signalisierung vorgesehenen Zellen ZS in den Kommunikationsendgeräten KE bzw. Netzabschlußeinrichtungen NA in bekannter Weise gebildet, jedoch wird für diejenigen Zellen Z, deren digitale Informationen ni zellenverlustfrei über die Kommunikationssysteme KS zu übermitteln sind, zusammen mit der Signalisierungsinformation si eine Anmeldeinformation ai und eine Ressourcenumfanginformation ri an das zugeordnete Kommunikationssystem KS übermittelt. Durch diese Übermittlung wird einerseits dem Kommunikationssystem KS angezeigt, daß die folgenden, zu übermittelnden Zellen Z zellenverlustfrei zu übermitteln sind und andererseits wird der für die Übermittlung der digitalen Informationen ni erforderliche Umfang von vermittlungstechnischen Ressourcen VR angemeldet. Nach Empfang einer derart gebildeten Zelle ZS in einem Komunikationssystem KS wird eine Verbindung zu der Ziel-Kommunikationsendeinrichtung KE in bekannter Weise aufgebaut, wobei in die Leitwegtabelle LT die entsprechenden vermittlungstechnischen Informationen vi eingetragen werden. Zusätzlich zu diesen bekannten vermittlungstechnischen Informationen vi wird die Ressourcenumfanginformation ri eingefügt. Des weiteren ist in die Leitwegtabelle LT eine durch das jeweilige Kommunikationssystem KS gebildete Ressourcenverfügbarkeitsinformation rvi eintragbar. Diese Ressourcenverfügbarkeitsinformation rvi wird in Abhängigkeit von der Verkehrsbelastung des Kommunikationssystems KS gebildet. Für das Ausführungsbeispiel sei angenommen, daß die Ressourcenverfügbarkeitsinformation rvi in die Leitwegtabelle LT eingetragen wird, wenn sich das Kommunikationssystem KS in einer Überlastsituation befindet.

Weist die Leitwegtabelle LT für die jeweilige Verbindung keine Ressourcenverfügbarkeitsinformation rvi auf, so werden nach Empfang der ersten zellenverlustfrei zu übermittelnden Zelle Z der jeweiligen Verbindung die erforderlichen vermittlungstechnischen Ressourcen VR zugeteilt, vorausgesetzt die vermittlungstechnischen Ressourcen VR sind noch verfügbar. Gleichzeitig wird in dem jeweiligen Kommunikationssystem KS eine Ressourcenbelegungsinformation rbi gebildet und in den jeweiligen Speicherbereich SB der Leitwegtabelle LT eingetragen. Hierdurch wird erreicht, daß die für die Übermittlung der zellenverlustfrei zu übermittelnden Zellen Z zuteilten vermittlungstechnischen Ressourcen VR ausschließlich für die Dauer dieser Verbindung reserviert sind, d. h. für die Übermittlung weiterer Zellen Z nicht mehr zur Verfügung stehen. Nach Empfang der letzten zellenverlustfrei zu übermittelnden Zelle Z wird durch das Kommunikationssystem KS die eingetragene Ressourcenbelegungsinformation rbi entfernt, wodurch die vermittlungstechnischen Ressourcen VR für die Vermittlung weiterer beliebiger Zellen Z zur Verfügung stehen.

Bei einer eingetragenen Ressourcenverfügbarkeitsinformation rvi wird nach Empfang der ersten zellenverlustfrei zu übermittelnden Zelle Z diese ebenso wie alle weiteren folgenden Zellen Z verworfen, d. h. nicht weitervermittelt. Durch das vollständige Verwerfen der Zellen Z wird erreicht, daß keine durch Zellenverlust gestörten, digitalen Informationen ni über das jeweilige Kommunikationssystem KS bzw. über die weiteren Kommunikationssysteme KS übermittelt werden. Hierbei führt das vollständige Verwerfen der Zellen Z zu einer erheblichen Störung, die in den jeweils eine Kommunikationsbeziehung aufweisenden Kommunikationsendeinrichtungen KE durch die höheren Protokollschichten in kürzester Zeit erkannt und zu einer Auslösung bzw. zu einem Abbruch der Verbindung führt. Hierdurch wird ein mehrmaliges Wiederholen von statistisch gestörten digitalen Informationsblöcken bzw. Zellen Z und damit eine zusätzliche Verkehrsbelastung der Kommunikationssysteme KS vermieden, wodurch bei zellenverlustfrei zu übermittelnden Zellen keine Überlastsituation des Kommunikationssystems KS auftritt.

Sind in die Leitwegtabelle LT durch Eintrag der Ressourcenumfanginformation ri die vermittlungstechnischen Ressourcen VR für die jeweilige Verbindung angemeldet, jedoch noch nicht genutzt, was durch den fehlenden Eintrag der Ressourcenbelegungsinformation rbi angezeigt wird, so können die angemeldeten vermittlungstechnischen Ressourcen VR noch für die Übermittlung von zellenverlustfrei oder von nicht zellenverlustfrei zu übermittelnden Zellen Z zugeteilt werden, vorausgesetzt, in die Leitwegtabelle LT ist keine Ressourcenverfügbarkeitsinformation rvi eingetragen. Dies bedeutet, daß die erste und die weiteren Zellen Z der Verbindung, für die vermittlungstechnischen Ressourcen VR angemeldet wurden, vollständig verworfen werden, wodurch die jeweilige Verbindung durch die Kommunikationsendeinrichtung KE ausgelöst, das heißt abgebaut wird. Mit Hilfe des erfindungsgemäßen Verfahrens können somit zellenverlustfrei zu übermittelnde Zellen Z zellenverlustfrei übermittelt oder vollständig verworfen werden, wobei die angemeldeten vermittlungstechnischen Ressourcen VR bis zum Eintreffen der ersten zellenverlustfrei zu übermittelnden Zelle Z für die Übermittlung ankommender Zellen Z einer weiteren Verbindung zugeteilt werden können und die ankommende erste und die weiteren zellenverlustfrei zu übermittelten Zellen Z vollständig verworfen werden.

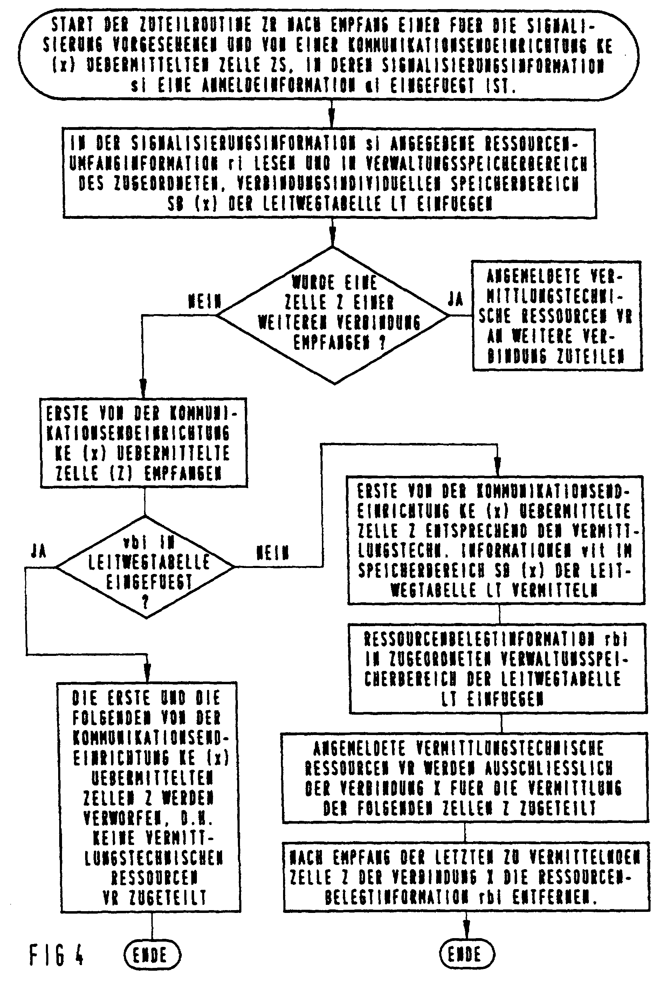

In FIG 4 ist in einem selbsterläuternden Ablaufdiagramm eine mögliche programmtechnische Realisierung des erfindungsgemäßen Verfahrens aufgezeigt. Die Zuteilroutine ZR ist zusätzlich zu dem bekannten statistischen Verfahren für die Übermittlung von Zellen in jedem Kommunikationssystem zu implementieren.

## Patentansprüche

1. Verfahren zur Zuteilung von vermittlungstechnischen Ressourcen (VR) in einem im Asynchron-Transfer-Modus wirkenden Kommunikationssystem (KS) mit angeschlossenen Kommunikationsendeinrichtungen (KE),
- bei dem von den Kommunikationsendeinrichtungen (KE), deren digitale, in Zellen (Z) paketierte Informationen (ni) ohne Zellenverlust über das Kommunikationssystem (KS) zu übermitteln sind, im Rahmen einer Verbindungssignalisierung durch eine Anmelde- sowie Ressourcenumfanginformation (ai, ri) ein für die Übermittlung der digitalen Informationen vorgesehener vermittlungstechnischer Ressourcenumfang angemeldet wird,
- bei dem in Leitwegtabellen (LT) des Kommunikationssystems (KS) mit dessen Hilfe verbindungsindividuell jeweils vermittlungstechnische Pfadinformationen (vit), die Anmeldeinformation (ai) sowie die Ressourcenumfanginformation (ri) eingetragen werden und zwei Ressourcenverwaltungsbereiche vorgesehen sind, in die mit Hilfe des Kommunikationssystems (KS) eine Ressourcenverfügbarkeitsinformation (rvi) und eine Ressourcenbelegungsinformation (rbi)einfügbar sind, wobei die Ressourcenverfügbarkeitsinformation (rvi) die verkehrsbelastungsabhängige Verfügbarkeit des angemeldeten Ressourcenumfangs im Kommunikationssystem (KS) anzeigt, und
- bei dem bei Empfang einer ersten, zellenverlustfrei zu übermittelnden Zelle (Z) im Kommunikationssystem (KS) in Abhängigkeit von der Einfügung einer Ressourcenverfügbarkeitsinformation (rvi) die erste und die weiteren Zellen (Z) verworfen oder Zellen verlustfrei mit Hilfe des angemeldeten vermittlungstechnischen Ressourcenumfangs (VR) vermittelt werden, wobei bei einer Vermittlung der Zellen (Z) eine Ressourcenbelegungsinformation (rbi) in den zugeordneten Ressourcenverwaltungsbereich eingefügt wird, wodurch der angemeldete Ressourcenumfang ausschließlich der jeweiligen Verbindung für die Übermittlung der zellenverlustfrei zu übermittelnden Zellen (Z) zugeteilt ist.

2. Verfahren nach Anspruch 1,
**dadurch gekennzeichnet,**
**daß** das Freiwerden des zugeteilten Ressourcenumfangs nach Empfang der letzten zellenverlustfrei zu übermittelnden Zelle (Z) durch Entfernen der Ressourcenbelegungsinformation (rbi) angezeigt wird.

3. Verfahren nach Anspruch 1 oder 2,
**dadurch gekennzeichnet,**
**daß** der angemeldete Ressourcenumfang bis zum Empfang der ersten zellenverlustfrei zu übermittelnden Zelle (Z) für die Vermittlung ankommender, zu übermittelnder Zellen (Z) einer weiteren Verbindung zuteilbar ist und daß bei einer Zuteilung die ankommende erste und weitere zellenverlustfrei zu übermittelnde Zellen (Z) diese vollständig verworfen werden.

4. Verfahren nach einem der vorhergehenden Ansprüche,
**dadurch gekennzeichnet,**
**daß** die Ressourcenumfangsinformation (ri) durch eine die Übermittlungsgeschwindigkeit anzeigende Bitrateninformation repräsentiert wird.

5. Verfahren nach einem der vorhergehenden Ansprüche,
**dadurch gekennzeichnet,**
**daß** die Ressourcenverwaltungsbereiche durch einen jeweils ein Bit repräsentierenden Speicherbereich realisiert sind und daß die Anmeldeinformation, Ressourcenverfügbarkeitsinformation (ai, rvi, rbi) und die Ressourcenbelegtinformation durch eine binäre, ein Bit umfassende Information repräsentiert ist.

6. Verfahren nach einem der vorhergehenden Ansprüche,
**dadurch gekennzeichnet,**
**daß** die das Verfahren zur Zuteilung von vermittlungstechnischen Ressourcen (VR) durch eine programmgesteuerte Zuteilroutine realisiert ist und einem statistischen Zuteilungsverfahren überlagerbar ist.

## Claims

1. Method for assigning switching resources (VR) in a communications system (KS) which is working in asynchronous transfer mode and has communication terminals (KE) connected,
- in which a switching resource scope, which is intended for the transmission of digital information, is registered in the course of connection signalling by means of registration and resource-scope information (ai, ri) by the communications terminals (KE), whose digital information (ni), which is packetized into cells (Z), is to be transmitted without any loss of cells via the communications system (KS),
- in which, in routing tables (LT) in the communications system (KS), with whose aid switching path information (vit), the registration information (ai) and the resource scope information (ri) are entered on a connection-specific basis and two resource administration areas are provided, into which resource availability information (rvi) and resource allocation information (rbi) can be inserted with the aid of the communications system (KS), with the resource availability information (rvi) indicating the traffic-load-dependent availability of the registered resource scope in the communications system (KS), and
- in which, on receiving a first cell (Z) which is to be transmitted without any loss of cells in the communications system (KS) as a function of the insertion of resource availability information (rvi), the first and the further cells (Z) are rejected or cells are switched without any losses with the aid of the registered switching resource scope (VR), with resource allocation information (rbi) being inserted into the associated resource administration area during switching of the cells (Z), by which means the registered resource scope is assigned exclusively the respective connection for transmission of the cells (Z) which are to be transmitted without any loss of cells.

2. Method according to Claim 1,
**characterized**
**in that** the fact that the assigned resource scope has become free after receiving the most recent cell (Z) which is to be transmitted without any loss of cells is indicated by removing the resource allocation information (rbi).

3. Method according to Claim 1 or 2,
**characterized**
**in that** the registered resource scope can be assigned to a further connection for the switching of incoming cells (Z) which are to be transmitted, until the reception of the first cell (Z) which is to be transmitted without any loss of cells, and in that, in the case of an assignment, the incoming first and further cells (Z) which are to be transmitted without loss of any cells, [lacuna] these are completely rejected.

4. Method according to one of the preceding claims,
**characterized**
**in that** the resource scope information (ri) is represented by bit rate information which indicates the transmission speed.

5. Method according to one of the preceding claims,
**characterized**
**in that** the resource administration areas are provided by a memory area which represents in each case one bit, and in that the registration information, resource availability information (ai, rvi, rbi) and the resource allocation information are represented by a binary information item, which comprises one bit.

6. Method according to one of the preceding claims,
**characterized**
**in that** the [lacuna] the method for assignment of switching resources (VR) is provided by a program-controlled assignment routine, and can be superimposed on a statistical assignment method.

## Revendications

1. Procédé pour allouer des ressources techniques de commutation (VR) dans un système de communication (KS) fonctionnant selon le mode de transfert asynchrone ATM et ayant des terminaux de communication (KE) raccordés,
- dans lequel les terminaux de communication (KE) dont les informations numériques (*ni*) assemblées en cellules (Z) sont à transmettre sans perte de cellule par l'intermédiaire du système de communication (KS) annoncent, dans le cadre d'une signalisation de liaison et par une information d'annonce ainsi que de volume de ressources (*ai*, *ri*), un volume de ressources techniques de commutation prévu pour la transmission des informations numériques,
- dans lequel on enregistre dans des tableaux d'acheminement (LT) du système de communication (KS), à l'aide de celui-ci et pour chaque liaison, des informations d'acheminement techniques de commutation (*vit*), l'information d'annonce (*ai*) ainsi que l'information de volume de ressources (*ri*) et on prévoit deux zones de gestion de ressources dans lesquelles on peut insérer à l'aide du système de communication (KS) une information de disponibilité de ressources (*rvi*) et une information d'occupation de ressources (*rbi*), l'information de disponibilité de ressources (*rvi*) indiquant alors la disponibilité, en fonction de la charge de trafic, du volume de ressources annoncé dans le système de communication (KS), et
- dans lequel, à la réception d'une première cellule (Z) à transmettre sans perte de cellule dans le système de communication (KS), en fonction de l'insertion d'une information de disponibilité de ressources (*rvi*), on rejette la première et les autres cellules (Z) ou on commute des cellules sans perte à l'aide du volume de ressources techniques de commutation (VR) annoncé, une information d'occupation de ressources (*rbi*) étant insérée dans la zone de gestion de ressources associée lors d'une commutation des cellules (Z), ce qui fait que le volume de ressources annoncé est alloué exclusivement à la liaison respective pour la transmission des cellules (Z) à transmettre sans perte de cellule.

2. Procédé selon la revendication 1,
**caractérisé par le fait qu'**on indique la libération du volume de ressources alloué après la réception de la dernière cellule (Z) à transmettre sans perte de cellule en supprimant l'information d'occupation de ressources (*rbi*).

3. Procédé selon la revendication 1 ou 2,
**caractérisé par le fait qu'**on peut allouer le volume de ressources annoncé, jusqu'à la réception de la première cellule (Z) à transmettre sans perte de cellule, pour la commutation de cellules (Z) arrivantes et à transmettre d'une autre liaison et que, en cas d'allocation, on rejette complètement la première et les autres cellules (Z) arrivantes et à transmettre sans perte de cellule.

4. Procédé selon l'une des revendications précédentes,
**caractérisé par le fait qu'**on représente l'information de volume de ressources (*ri*) par une information de débit binaire indiquant la vitesse de transmission.

5. Procédé selon l'une des revendications précédentes,
**caractérisé par le fait que** les zones de gestion de ressources sont réalisées par une zone de mémoire représentant à chaque fois un bit et que l'information d'annonce, l'information de disponibilité de ressource et l'information d'occupation de ressources (*ai*, *rvi, rbi*) sont représentées à chaque fois par une information binaire comprenant un bit.

6. Procédé selon l'une des revendications précédentes,
**caractérisé par le fait que** le procédé pour allouer des ressources techniques de commutation (VR) est réalisé par une routine d'allocation commandée par programme et peut être superposé à un procédé d'allocation statique.
